# EUROPEAN PATENT APPLICATION

(11) **EP 4 307 042 A1**
(43) Date of publication of application: **17.01.2024**
(21) Application number: 22185027.4
(22) Date of filing: 14.07.2022
(51) Int. Cl.: G02F 1/35, G02F 1/365

(54) **A DEVICE FOR MULTI-WAVELENGTH AND ULTRAFAST OPTICAL PULSE GENERATION**

(71) Applicant: NKT Photonics A/S, 3460 Birkerød (DK)
(72) Inventor: MONTAGUE, Patrick Bowen, 3460 Birkerød (DK); CHRISTENSEN, Erik Nicolai, 3460 Birkerød (DK); ENGELSHOLM, Rasmus, 3460 Birkerød (DK)
(74) Representative: Zacco Denmark A/S

(57) **Abstract**

Disclosed is a device for multi-wavelength generation, comprising: a pulsed light source configured to emit a train of light-pulses, wherein each of the light-pulses are defined by a center wavelength having a first pulse duration and a first bandwidth, and a first hollow core optical fiber having a core diameter, d, wherein the first hollow core optical fiber is configured to spectrally broadening the train of light-pulses, thereby generating a train of multi-wavelength-pulses having a plurality of wavelengths, wherein the first hollow core optical fiber has a dispersion that is selected such that that the light-pulses are spectrally broadened by primarily self-phase modulation (SPM).

## Description

### Field of the invention

The present disclosure relates generally to a device to generate multi-wavelengths. More specifically, the present disclosure relates to generating ultrafast optical pulses.

### Background

Generation of multi-wavelengths with ultrashort pulses are known in the field of spectral broadening of light from a pulsed light source having a single wavelength. The broadening of light from a pulsed light source can be in various manners, but typically an optical fiber is used.

When using a fiber, the simplest method for broadening a pulse of light relies primarily on self-phase modulation. Here, the dominant nonlinear optical effect in the optical fiber occurs because of the optical Kerr effect.

Self-phase modulation (SPM) has the effect of splitting a pulse spectrum with an initially Gaussian profile into two dominant spectral lobes, one of which is shifted to the shorter wavelengths, the other to the higher wavelength, see for example the thesis "An Investigation of Spectral Broadening by Nonlinear Optical Effects in Photonic Crystal Fibers", by MacAulay James Harvey, from 2021 for an introduction to nonlinear optical effects to broaden the spectrum of ultrashort pulses of light.

As an example of SPM, it has been demonstrated in the article "Self-phase modulation enabled, wavelength-tunable ultrafast fiber laser sources: an energy scalable approach", in Opt. Express, 2016, 15328-15340, Vol. 24, No. 14 by Wei Liu et al., how Spectral broadening from self-phase modulation can be used to broaden an initially narrow pulse spectrum centered at 1030 nm such that the spectrum ranges from 825 to 1210 nm. In this disclosure, a solid-core fiber with low dispersion and small mode-field-diameter (of around 2.2 µm) enabled a fiber-optic broadening of an input optical spectrum that is dominated by self-phase modulation (SPM) plus self-steepening. Due to the minimal effect of dispersion, the resulting broadened spectrum featured well isolated spectral lobes. Each of these spectral lobes could then be selected by an optical bandpass filter, producing nearly transform-limited pulses. Without external compression, the filtered spectral lobes corresponded to ~100-fs (nearly transform-limited) pulses with >1 nJ pulse energy. One problem of this approach is that broadening of an optical spectrum using a fiber with a small mode-field-diameter (MFD) results in the power coupled into the fiber is environmentally sensitive, making the resulting tunable source unpractical for multi-photon-microscopy (MPM) applications. For this reason, Wei Liu et all proposed to change the solid core optical fiber with a solid core large-mode-area fiber.

The proposal by Wei Liu et al. has been described in the article "Energetic ultrafast fiber laser sources tunable in 1030-1215 nm for deep tissue multi-photon microscopy", Opt. Express, 2017, 6822-6831, Vol. 25, No. 16 by Wei Liu et al. Here, a large-mode-area (LMA) fiber with a large MFD of up to 7.5 µm and with proper dispersion (for SPM dominated spectral broadening) allowed to scale up the pulse energy up to 20 nJ, however in the wavelength range of 1030-1215 nm at 55-MHz repetition rate due to more power being couped into the fiber. The wavelength range and pulse energies here were found practical for MPM applications. With a grating-based compressor, filtered pulse durations about 190 fs were achieved from an initial 90 fs source. However, if the purpose is to provide wavelengths of less than 950 nm as in the first example, then the shifting of the center wavelength by 200 nm becomes problematic.

To provide a laser that provides >1 nJ with ultrashort pulses and tunable in the entire 800-1300 wavelength range, which at the same time is insensitive to environmental disturbances, a solution was proposed by Young-Gyun Jeong et al. in the article "Direct compression of 170-fs 50-cycle pulses down to 1.5 cycles with 70% transmission" in Scientific Reports (2018) 8:11794. In this article, extreme pulse compression was obtained by relying on moderately driving self-phase modulation (SPM) over an extended propagation distance. This avoided other detrimental nonlinear mechanisms taking over and deteriorating the SPM process. The long propagation was obtained by means of a hollow-core fiber (HCF), up to 6 m in length. The HCF was filled with gas and pressurized at different levels to optimize the stability and spectrum of the output. This work is related to the US patent application US 2020259305.

One problem with the HCF as disclosed in both the article by Young-Gyun Jeong et al. and the US patent application is that the provided pulses are not single-cycled. As indicated by the title of the article by Young-Gyun Jeong et al., the minimum pulse cycle is 1.5. Having a pulse cycle of more than 1 may not be the most optimal in various applications.

There has therefore been a desire to provide a tunable and ultrafast pulse device for multi-wavelength generation that is also single-cycled.

Such a device is disclosed in the article "Efficient single-cycle pulse compression of an ytterbium fiber laser at 10MHz repetition rate" in Optics Express, 9099-9110, Vol. 28, No. 7, 30 March 2020, by F. Köttig et al. In this disclosure, a pulsed light source operating with pulses having a wavelength of 1030 nm is first compressed in a first compression stage having an anti-resonant and krypton-filled single-ring photonic crystal fiber (SR-PCF). The first compression stage is designed such that it provides normal dispersion spectral broadening by self-phase-modulation. This, together with a phase compensation with negatively chirped mirrors, provide pulse compression of the pulses from the pulsed light source having more than 320 fs and down to 25 fs. These compressed pulses are then further compressed down to under 4 fs using a second compression stage having another anti-resonant SR-PCF, filled with Neon at a pressure of 50 bar. The second compression stage is designed such that it provides soliton-self-compression.

The effect of self-soliton compression clearly compresses the pulses down to a desired ultra-fast pulse, but it also washes out the two dominant spectral lobes as obtained from the SPM broadening. Since these two lobes are desirable in many applications, it is not desirable to use the setup as disclosed by F. Köttig et al.

Even if the second compression stage is not used, the system by F. Köttig et al., particularly the first compression stage, has several problems. Firstly, the first compression stage is very long because 3.8 m a long SR-PCF is used and coiled in one turn with a 0.8 m diameter. Accordingly, the system is very large. Secondly, since the SR-PCF comprises Krypton gas, the system is very expensive. Thirdly, due to the long length of the SR-PCF, polarization changes are controlled by a pair quarter-wave plates, making the system complex. Fourthly, to control the power, a combination of a broadband half-wave plate and a thin-film polarizer is used, making the system even more complex.

The first compression stage as disclosed by F. Köttig et al. is proposed because the purpose is to provide a system that is scalable to handle light sources with very high repetition rates. However, as just described, this comes with a cost in terms of being large, expensive, and very complex.

### Summary

It is an objective of this disclosure to provide a device for multi-wavelength generation that overcomes the problems of the prior art.

Further, it is an objective of this disclosure to provide a device for multi-wavelength generation that is compact, has low cost, and simple.

Even further, it is an objective of this disclosure to provide a device for multi-wavelength generation that provides ultrafast optical pulses, which may be tunable.

These and other objectives have been solved by the device for multi-wavelength generation as defined in the claims and as described below in the present disclosure.

In one aspect there is disclosed a device for multi-wavelength generation, comprising:
- a pulsed light source configured to emit a train of light-pulses, wherein each of the light-pulses are defined by a center wavelength having a first pulse duration and a first bandwidth, and
- a first hollow core optical fiber having a core diameter, D, wherein the first hollow core optical fiber is configured to spectrally broadening the train of light-pulses, thereby generating a train of multi-wavelength-pulses having a plurality of wavelengths, wherein the first hollow core optical fiber has a dispersion that is selected such that that the light-pulses are spectrally broadened by primarily self-phase modulation (SPM).

In this context, and as described in the prior art in the background section, it is well-understood that when spectral broadening is by SPM, then two spectral lobes are produced within the multi-wavelength-pulses. Accordingly, the two spectral lobes characterize spectral broadening by SPM. Thus, if two spectral lobes, such as for example isolated lobes, one of which is of shorter wavelengths, and the other is of higher wavelength, and having more powers than others, can be identified in a spectrum after pulse broadening, then broadening is said to be dominated by SPM.

According to the first aspect, the dispersion is selected such that a first spectral lobe is centered around a first wavelength, and a second spectral lobe is centered around a second wavelength.

Further, according to the first aspect, the first hollow core optical fiber is an anti-resonant hollow core optical fiber.

Even further, according to the first aspect, the anti-resonant hollow core optical fiber has a core diameter, wherein the core diameter, D, is 80 microns or less.

An anti-resonant hollow core optical fiber is a well understood term and fiber in the field of fiber optics. Different types of a such a fiber are for example presented in the article "Design and properties of hollow anti-resonant fibers for the visible and near infrared spectral range", in Journal of Lightwave Technology (Volume: 33, Issue: 21, Nov.1, 1 2015) by Walter Belardi. Accordingly, for an anti-resonant hollow core optical fiber, the diameter, D, is also a well understood term. As understood from the article by Belardi, and an anti-resonant hollow core optical fiber comprises a plurality of anti-resonant structures, ARS, which may also be called cladding tubes, or capillaries. The terms "cladding tubes" and "capillaries" are therefore interchangeable. The cladding tubes, or capillaries, have a thickness, t, which may also be called capillary wall-thickness. The capillaries may, as described by Belardi, be single, double, also called nested, triple, and free core boundary, meaning that the capillaries are not touching each other. Typically, the capillaries are circular, thus having an inner diameter, d, which is much smaller than the core diameter, D, but the capillaries may also have other forms, such as droplets.

As described in the background section, using an anti-resonant hollow core optical fiber for pulse broadening by primarily SPM is well-known, for example as demonstrated by F. Köttig et al.

However, using an anti-resonant hollow core optical fiber with a core diameter, D, of 80 microns to achieve pulse broadening by primarily SPM was not demonstrated or proposed by F. Köttig et al. On the contrary, it was proposed by F. Köttig et al. to use a large core of 86 microns since this shifted the pump pulses into the normal dispersion region, preventing the onset of modulational instability, which would otherwise have degraded the coherence of the compressed pulses.

However, the inventors of the present disclosure have found that it is not required to use a large core to provide pulse broadening by primarily SPM, and therefore the proposed solution is therefore to use the lower hollow core diameter, D, of 80 microns or less. By doing so, they have found that the normal dispersion region can be achieved in other ways, but also that a complete normal dispersion region is also not required to provide pulse broadening by primarily SPM. This and other features will be described in the present disclosure.

Further, by using an anti-resonant hollow core optical fiber with a core diameter, D, of 80 microns or less, provides many advantages as will also be described in this disclosure.

Generally, the inventors of the present disclosure have found that by using an anti-resonant hollow core optical fiber with a core diameter, D, of 80 microns or less, they have been able to provide pulse broadening by primarily SPM such that a device for multi-wavelength generation is provided, thereby being compact, having low cost, and low complexity.

The device according to the first aspect has several applications due to being compact, having low cost and low complexity.

Accordingly, in a second aspect of the disclosure, there is provided a system configured for:
- multi-photon excitation, or
- activating neurons in a brain, or
- deep-tissue multiphoton imaging, or
- high-frequency voltage imaging in neurons, or
- ophthalmology, or
- laser writing, or
- spectroscopy, or
- microscopy, or
- micromachining,
wherein the system comprises the device according to the first aspect.

Further details of the present disclosure are provided in the below description.

### Brief description of the drawings

The above and/or additional objects, features and advantages of the present disclosure, will be further described by the following illustrative and nonlimiting detailed description of embodiments of the present disclosure, with reference to the appended drawing(s), wherein:
**Fig. 1** shows results of a simulation of the device according to the present device, where the core diameter is varied from 20 microns to 80 microns, and where core is filled with Argon gas at 1 bar.
**Fig. 2** shows results of a simulation of the device according to the present device, where the core diameter is varied from 20 microns to 80 microns, and where core is filled with Argon gas at 10 bar.
**Fig. 3** shows results of a simulation of the device according to the present device, where the core diameter is varied from 20 microns to 80 microns, and where core is filled with Argon gas at 40 bar.
**Fig. 4** shows results of an experiment setup demonstrating a working example of the device according to the present disclosure.
**Fig. 5** shows results of a simulation of the device according to the present device, where the capillary wall-thickness is varied from 200 nm to 700 nm, the core has a diameter of 50 microns, and where core is filled with Argon gas at 40 bar - in a large wavelength range from 250 nm to 2250 nm.
**Fig. 6** shows results of a simulation of the device according to the present device, where the capillary wall-thickness is varied from 200 nm to 700 nm, the core has a diameter of 50 microns, and where core is filled with Argon gas at 40 bar - in a narrow wavelength range from 900 nm to 1100 nm.
**Fig. 7** shows results of a simulation of the device according to the present device, where the core diameter is varied from 10 nm to 50 nm, the capillary wall-thickness is 750 nm, and where core is filled with Argon gas at 1 bar.
**Fig. 8** shows results of a simulation of the device according to the present device, where the gas type is varied, the core has a diameter of 50 microns, the capillary wall-thickness is 300 nm, and where core is filled with Argon gas at 20 bar.
**Fig. 9** shows results of a simulation of the device according to the present device, where the gas pressure is varied between 1 bar and 40 bare, the core has a diameter of 50 microns, the capillary wall-thickness is 300 nm, and where core is filled with Argon gas.
**Fig. 10** shows a first example of the system according to the second aspect, wherein the system comprises the device according to the first aspect.
**Fig. 11** shows a second example of the system according to the second aspect, wherein the system comprises the device according to the first aspect.

### Detailed description

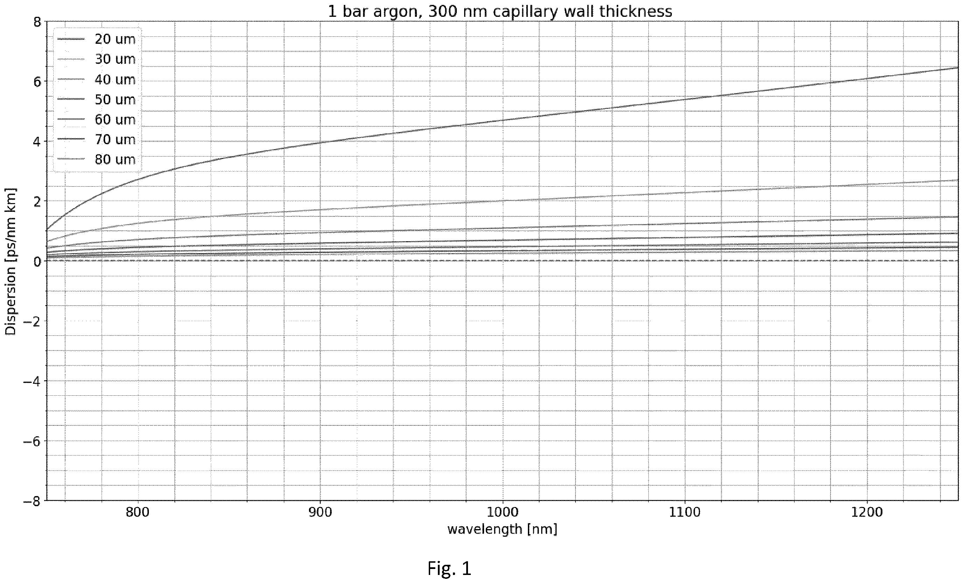

The dispersion of an anti-resonant hollow core optical fiber varies with the core diameter, D. The inventors of the present application have made numerical simulations on this dependence, as can be seen in **Fig. 1****.** In the simulation of **Fig. 1**, the anti-resonant capillary wall-thickness has been set to 300 nm, and the hollow core is filled with Argon, and at a pressure of 1 bar, and the core diameter, D, is varied from 20 nm to 80 nm. The dispersion (ps/ (nm km)) is shown for the wavelengths from 750 nm to 1250 nm. **Fig. 1** clearly shows that the larger the diameter, the lower the dispersion. Further, **Fig. 1** also clearly shows that when the gas has a pressure of 1 bar, then all the dispersion values are above zero, meaning that the dispersion is positive. Positive dispersion means that anomalous dispersion is present in the fiber. High anomalous dispersion is not desirable when dominant SPM is desired. This is because high anomalous dispersion provides that modulational instability dominates over SPM. To provide pulse broadening where SPM is the dominating effect, or where the pulse broadening is primarily by SPM, normal dispersion (i.e. negative dispersion) must take place in the hollow core optical fiber. Anomalous dispersion can be shifted to normal dispersion by increasing the pressure of the gas.

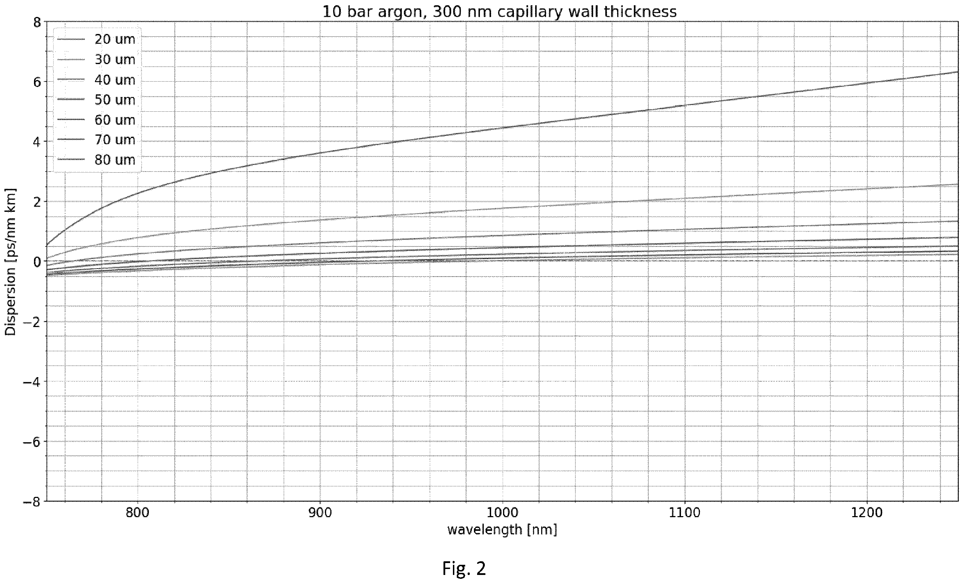

This is shown in **Fig. 2**, where the pressure now is increased to 10 bar. As can be seen from **Fig. 2**, normal dispersion for wavelengths of below 1000 nm is now obtained for the hollow core optical fiber having a core diameter, D, of 80 microns or more. For this reason, F. Köttig et al. proposed using an anti-resonant hollow core optical fiber with a core diameter of 86 microns having a capillary size of 730 nm and a Krypton gas pressure of 10 bar. Using a pressure of 10 bar or lower is advantageous because it may be easy to handle pressures of this magnitude. This is also a reason why a pressure of 10 bar in combination with a large core diameter, such as 86 microns, was used by F. Köttig et al., and a reason why using a pressure of 1 bar in combination with an even large core diameter of about 500 microns, however in a non-anti-resonant HCF, was used by Young-Gyun Jeong, et al. In other words, using a large core diameter of a HCF (having a core diameter of more than 86 microns), thereby also using a long fiber (of more than 3.0 m), and low gas pressure (lower than 10 bar) has been the most common way of providing pulse broadening by primarily SPM, particularly because low gas pressure provides simple gas handling, and a large core diameter provide great power input stability. Accordingly, in the community of pulse broadening, it has been commonly believed that working outside these limitations would not work properly or at least not easily.

However, the inventors of the present disclosure have challenged the common belief, and experimented with using much lower core diameters, much lower fiber lengths, and much higher pressures, and now found that it is working.

Particularly, as described in the summary of the present disclosure, the inventors have seen that by providing an anti-resonant HCF with a core diameter of 80 microns or less, they have been able to demonstrate pulse broadening by primarily SPM.

This has not previously been described before, and further insight into why this works will now be described.

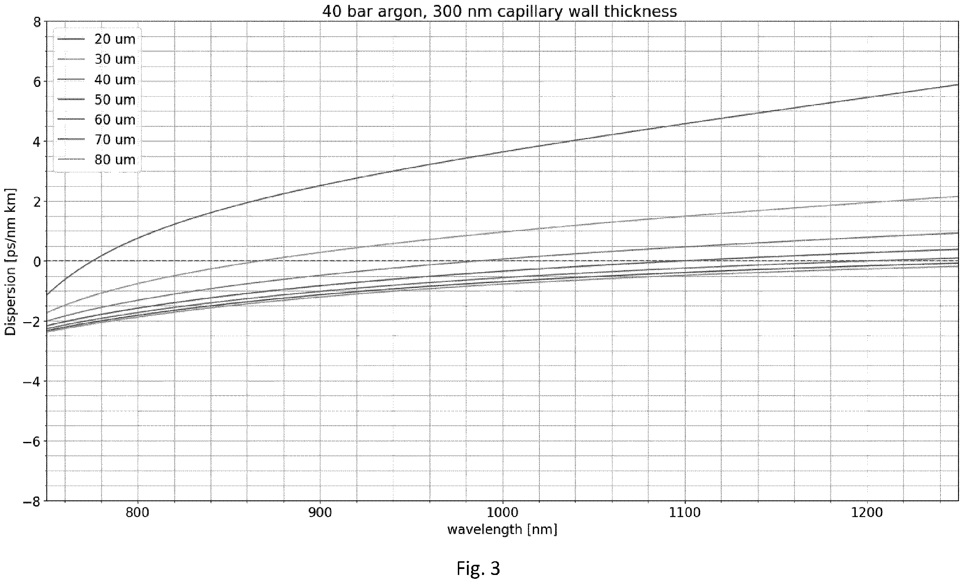

A first step to understand the basic principle is by simulations. **Fig. 3** shows the result of using an anti-resonant HCF having diameters varying from 20 microns and up to 80 microns, where the capillary wall-thickness is set to 300 nm, and where the hollow core is filled with Argon gas at a pressure of 40 bar. In **Fig. 3** it can now be seen that normal dispersion for wavelengths from 750 nm and up to 1100 nm is achieved for core diameters being 50 microns, 60 microns, 70 microns, and 80 microns. Further, it can be seen that using anti-resonant hollow core fibers with diameters from 20 microns to 40 microns have very low anomalous dispersion around 1100 nm, where the dispersion is less than 5 nm/(ps km). Even further, it can be seen that using anti-resonant hollow core fibers with diameters from 20 microns to 40 microns have even lower anomalous dispersion around 900 nm, where the dispersion is less than 3 nm/(ps km) and even -0.5 for the 40 microns diameter, thus being normal here.

With these observations, it can be concluded that in the range from 900 nm to 1100 nm, the anomalous dispersion is so low that soliton self-compression is limited. Further, the inventors have found that the modulational instability gain bands are shifted to greater detuning, and therefore this may have further limited the MI onset. Even further, the inventors have found that the design of the optical fiber (such as using an optimal capillary thickness) may position the MI bands into the non-transmitting resonant bands of the fiber, further weakening the MI effect. Accordingly, using an anti-resonant hollow core optical fiber with diameters of 80 microns or less provides that the MI effects are limited, thereby allowing SPM to dominate as the main nonlinear effect, particularly in the wavelength range from 900 nm to 1100 nm, but as can be seen from **Fig. 3**, this applies all the way from 750 nm to 1250 nm. For this reason, an advantage of using an anti-resonant hollow core optical fiber with diameters of 80 microns or less provides low, close to anomalous dispersion in the wavelength range from 750 nm to 1250 nm.

As has just been described, the capillary thickness affects the MI effects, and therefore, the pressure of 40 bar as has been used as an example to demonstrate the effect, is not the only way to achieve dominant SPM pulse broadening. In fact, using lower pressures will still provide relatively low dispersion so that SPM is the dominating effect, keeping of course the hollow core diameter at 80 microns or less. Other means of providing dominant SPM pulse broadening in anti-resonant hollow core fibers having a diameter of 80 microns or less, other than using a high pressure such as 40 bar, is disclosed later in the present application. In the following, the gas pressure is discussed a bit further to understand why a high pressure is also advantageous in comparison to using low gas pressures.

The gas pressure, as above described, is an important parameter in SPM pulse broadening. The reason for this is that the non-linearity (which controls the so-called X⁽³⁾ non-linearity including SPM and others) increases linearly with the pressure. Accordingly, by using a high gas pressure, the SPM broadening happens more quickly, allowing the use of short fiber lengths as well. Further, a high gas pressure may be responsible for shifting the energy to the two spectral lobes. In this manner, a high gas pressure may provide that the two spectral lobes comprise most of the energy, such as more than 40% or more than 50% of the total energy.

As with the common belief, that using large hollow core diameters and using low pressure is the optimal method of obtaining SPM broadening, Young-Gyun Jeong, et al. also described in reviewing the prior art that regardless of the method employed, the common strategy is to make the propagation "as least nonlinear as possible" to avoid other detrimental nonlinear effects distort the spectral phase and thus achieve a well-defined output. Further, Young-Gyun Jeong, et al. described that also his method relied on complying with the common strategy. This underlines again that using low non-linearity, thus low pressure, in combination with using a hollow core fiber having a large core diameter, is the most common strategy for many reasons.

The inventors of the present disclosure have not relied on using the common strategy because they have seen other advantages and because they have seen it working.

One of the great advantages of using a hollow core optical fiber with a core diameter of 80 microns or less is that the HCF allows for few-mode operation, or close thereto. Particularly, the HCF allows for operation with fewer modes in comparison to a HCF having a larger core diameter. In this manner, using a hollow core optical fiber with a core diameter of 80 microns or less, can be operated without the need for curling the fiber to reduce parasitic modes.

Further, another advantage of using a hollow core optical fiber with a core diameter of 80 microns or less, since the length of the fiber scales with the diameter thereof, is that the length can be shortened to a very compact size. In this manner, the claimed solution provides a device for multi-wavelength generation that is compact.

Even further, a third advantage of using a hollow core optical fiber with a core diameter of 80 microns or less, since the length of the fiber scales with the diameter thereof, is that a high gas pressure can be allowed in a short fiber, making it easier to work with.

A fourth advantage of using a hollow core optical fiber with a core diameter of 80 microns or less is therefore also that it provides for low dispersion at exactly these wavelengths or around these wavelengths.

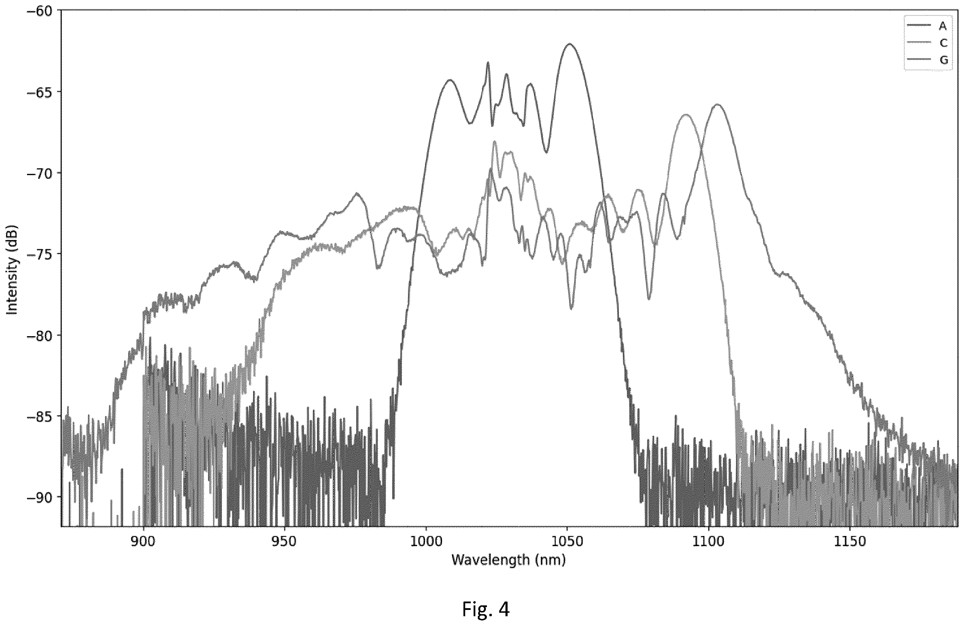

As an example of demonstrating an SPM broadened pulse, the inventors of the present disclosure have made an experimental setup, thereby demonstrating an example of how the present disclosure can be practiced. In the setup, they used an anti-resonant hollow core optical fiber having an inner core diameter of 50 microns, where the length of the fiber is 0.3 m, and wherein the hollow core is filled with Argon gas at a pressure of 36 bar. The pulse duration of the pulsed light source is 300 fs, and the center wavelength was at 1030 nm. The SPM broadened pulse is shown in **Fig. 4****.** Here, the A-curve clearly shows that the light-pulses are spectrally broadened by primarily self-phase modulation (SPM), whereby two spectral lobes are produced within the multi-wavelength-pulses. The first spectral lobe is centered around a first wavelength of around 1000 nm, and the second spectral lobe is centered around a second wavelength of around 1050 nm.

For comparison, the B-curve and the C-curve do not show pulses that are "spectrally broadened by primarily self-phase modulation (SPM), whereby two spectral lobes are produced within the multi-wavelength-pulses". These curves have been produces with non-optimal pulse energies, and are included here just to show a spectrum not having the characteristic or isolated SPM side-lobes at the edges.

As has been demonstrated in this experimental setup, a high pressure of 40 nm was not used to obtain SPM broadening.

Obtaining SPM broadening, other than using high pressure of about 40 bar, and still using an anti-resonant hollow core optical fiber having an inner core diameter of 80 microns or less is disclosed in the below. Further, other features and examples are also disclosed below.

### The hollow core optical fiber and the dispersion

In one embodiment, the core diameter, D, is ranging from 20 microns to 70 microns. This range has been found as an optimum. For example, as can be seen from **Fig. 3**, this is an optimum in that using 20 microns or more provides very low dispersion, whereas the difference between using 70 microns and 80 is quite limited.

In another embodiment, the core diameter, D, is ranging from 30 microns to 60 microns. This range has also been found as a possible optimum. For example, as can also be seen from **Fig. 3**, this is another optimum in that using 30 microns or more provides extremely low dispersion, whereas the difference between using 60 microns and 70 is still quite limited.

In yet another embodiment, the core diameter, D, is ranging from 40 microns to 50 microns. This range may be optimal in that it provides a good compromise between low dispersion and few-mode-operation.

In some embodiments, the core diameter, D, is ranging from 50 microns to 80 microns. This range may be optimal in that it provides for the lowest dispersion, which may also be fully normal dispersion for a broad wavelength range, for example from 750 nm to 1100 nm, see for example **Fig. 3**, where the anomalous dispersion is obtained using a high pressure and thin capillary wall-thickness.

As can be understood from the above embodiments, selecting the diameter may depend on various other parameters, such as the application or the gas pressure, but it may also depend on for example the choice of the light source.

In a preferred embodiment, the dispersion is selected to be below an absolute value of 20 ps/(nm km) for the wavelengths ranging from 900 nm to 1200 nm, such as ranging from 900 nm to 1100 nm. The wavelength-range from 900 nm to 1200 nm is an interesting range, as this provides for many interesting applications, as will be discussed in relation to the second aspect of this disclosure. The inventors have found that selecting a dispersion below an absolute value of 20 ps/(nm km), provides for pulse broadening, where SPM is the dominant effect.

In another preferred embodiment, the dispersion is selected to be below an absolute value of 10 ps/(nm km) for the wavelengths ranging from 900 nm to 1200 nm, such as ranging from 900 nm to 1100 nm. This also provides for pulse broadening, where SPM is the dominant effect, and is in fact achievable by for example using core diameters, D, that are between 20 microns and 80 microns, even at low gas pressures, see for example **Figs. 1-3**. Accordingly, in a most preferred embodiment, the dispersion is selected to be as close to zero as possible, such as less than 2 ps/(nm km) for the wavelengths ranging from 900 nm to 1200 nm, such as ranging from 900 nm to 1100 nm.

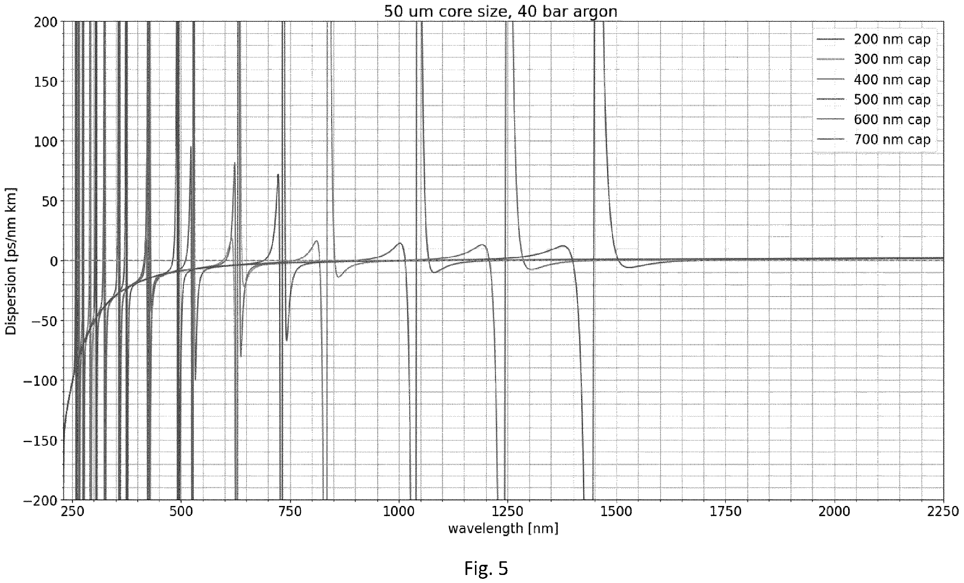

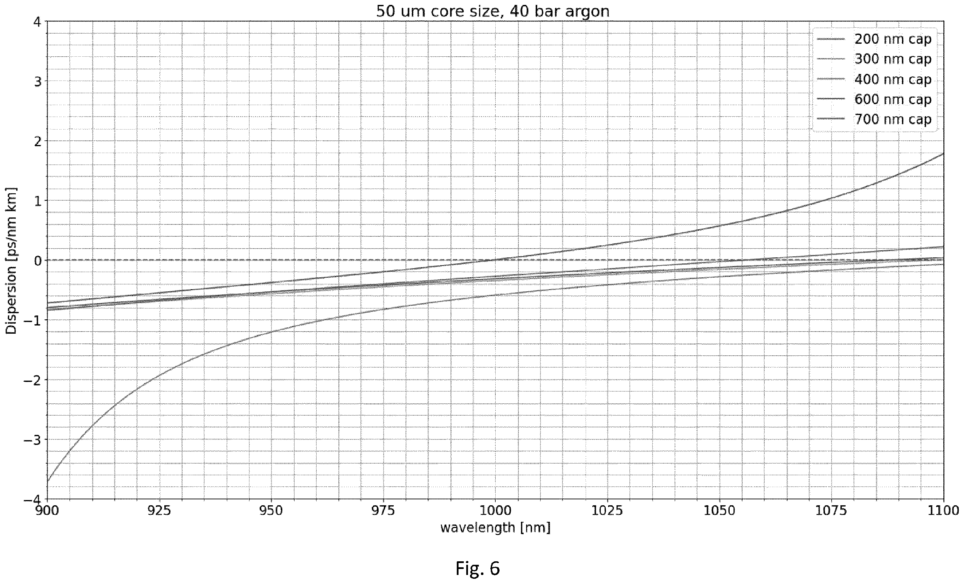

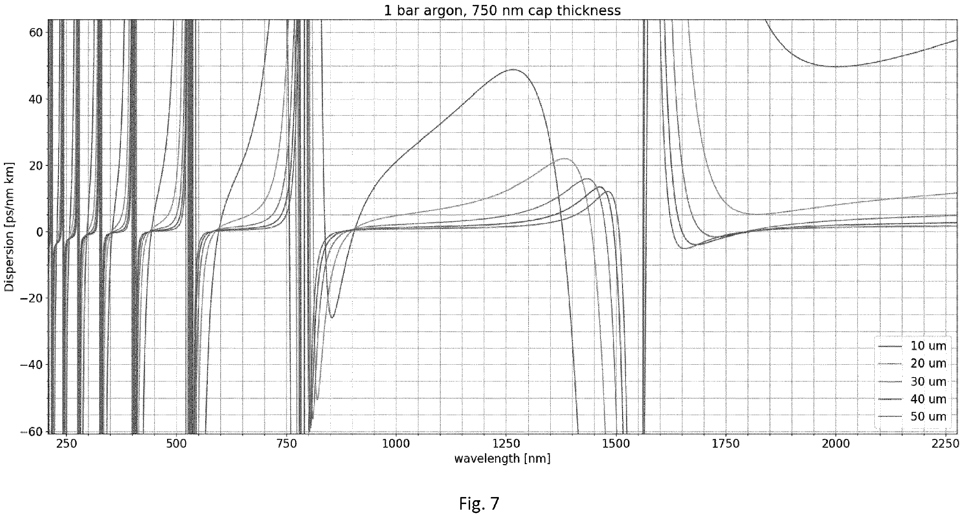

In most embodiments, the first hollow core optical fiber comprises a plurality of capillaries, forming anti-resonant structures, each of the capillaries having a capillary wall-thickness, t, that is below 800 nm, such as below 500 nm, such as below 400 nm, such as around 300 nm. As previously described, the fiber design can be optimized with for example the capillary wall-thickness to adjust the modulational instability. MI. Special care has however to be taken when deciding on the capillary wall-thickness as the wall-thickness also is responsible for resonance at specific wavelengths. For example, a 500 nm capillary wall-thickness will provide resonance at 1000 nm, 500 nm, 333 nm, and 250 nm. This phenomenon can be seen in **Fig. 5**, where a hollow core optical fiber is simulated with a core diameter, D, of 50 microns, and the hollow core is filled with Argon gas at 40 bar. If it is desired to use is wavelengths in the range from for example 900 nm to 1100 nm, the 500 nm would not be the optimal choice. For many applications of the device of the present disclosure, the desired wavelength range is from 900 nm to 1100 nm, so for this wavelength range, **Fig. 6** shows how the capillary wall-thickness varies the respective dispersion. From **Fig. 6**, and if anomalous dispersion is desired in the described wavelength range, then the optimal capillary wall-thickness is 300 nm, or around this wall-thickness. In the specific case, as simulated, this is of course for a device, where the core diameter, D, has been selected to be 50 microns, and Argon gas is pressurized at 40 bar inside the core. Accordingly, in a preferred embodiment, the capillary wall-thickness is around 300 nm. This optimal capillary wall-thickness was therefore also shown in the simulations for **Figs. 1-3**. Using a relatively thin capillary wall-thickness, of around 200 nm to 400 nm provide a broader wavelength region with a flat dispersion profile as can also be seen from **Fig. 6**, which in some embodiments may be desirable. However, using a wall-thickness of around 300 nm may not always be the most optimal case. For example, because it may be difficult to manufacture, or simply because the wall-thickness is relatively thin. In some embodiments, it may therefore be desirable to use a thicker capillary wall-thickness, still below 800 nm, such as around 750 nm, 700 nm or 600 nm. As an example of this, the dispersion for a large wavelength-range from 250 nm to 2250 nm for a hollow core with varying diameter and capillary size of 750 nm, pressurized at 1 bar with Argon gas, is calculated by simulations and shown in **Fig. 7****.** From this figure it can be seen that in the range from 900 nm to around 1200 nm, the dispersion is positive, but below an absolute value of 20 ps/(nm km) for diameters that range from 20-50 nm, thus only slightly anomalous. Further, from this figure it can be seen that in the range from 900 nm to around 1200 nm, the dispersion is not varying very much, and is also flat. Both the low flatness and the low absolute value of the dispersion may be very important parameters in terms of achieving pulse broadening that is dominated by SPM. Thus, since both low flatness and low absolute value of the dispersion for a range from 900 nm to 1200 nm for a hollow core fiber having a diameter of below 80 nm, is obtained by using a capillary wall-thickness of less than 800 nm, such as around 750 nm as shown here, but also around 700 nm or 600 nm, then a relatively thick capillary wall-thickness is a good solution for obtaining pulse broadening that is dominated by SPM.

In some setups, it may be desired to have a specific polarization, for example to increase sensitivity at a sample plane or at detector plane. A control of the polarization through the HCF and/or before and/or after the HCF may therefore be desired. Accordingly, in one embodiment, the first hollow core optical fiber is a polarization maintaining fiber.

In one embodiment, the first hollow core optical fiber has a length of less than 3.0 m, more preferably less than 2.0 m, even more preferably less than 1.0 m, most preferably less than 0.5 m, such as less than 0.3 m or less than 0.1 m. The length of the fiber is determined by the core diameter of the fiber, so by requiring that a hollow core diameter must be less than 80 microns, according to the present disclosure, may in most embodiments scale the length of the fiber to a corresponding length. As previously described, a short fiber length provides a compact device.

In some embodiments, the first hollow core optical fiber is filled with air. The inventors of the present disclosure have seen that in some embodiments, air is able to provide pulse broadening that is dominated by SPM. This embodiment provides both a simple and low-cost device, where a special type of gas needs not to be handled and acquired.

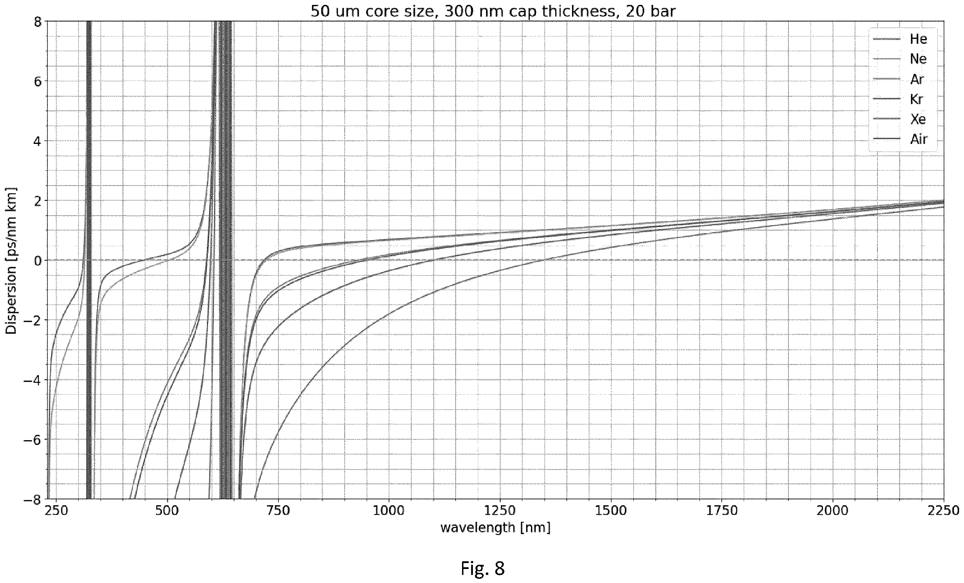

In other embodiments, the first hollow core optical fiber is filled with a gas different from air, and wherein the gas is a Raman inactive gas, preferably one of the gases being Argon, Helium, Neon, Krypton and Xenon. These gases, together with air provide different dispersion in a hollow core optical fiber, as is shown in **Fig. 8**, which is provided by simulating a hollow core optical fiber having a hollow core diameter of 50 microns, a capillary wall-thickness of 300 nm and varying the gas type set to a pressure of 20 bar. The different gases have different advantages. From **Fig. 8** it can be seen that both air and Argon provides almost the same dispersion profile, showing both that air and Argon are good candidates for providing low absolute dispersion. Using Helium and Neon, provides a flat dispersion curve across a long wavelength-range. Using Krypton provides normal dispersion for a wavelength-range from around 750 nm and up to 1100 nm, whereas Xenon extends the normal dispersion region up to 1350 nm. Krypton and Xenon may have rather high cost, so to provide a low-cost device, it may in some embodiments be desirable to use the cheaper gases such as air, Argon, Helium and Neon. Alternatively, using a Raman active gas may be also used, as such a gas under, certain conditions, may still provide pulse broadening that is dominated by SPM, for example because a Raman active gas may shift the Raman active light away from the wavelength range where pulse broadening by SPM is dominant.

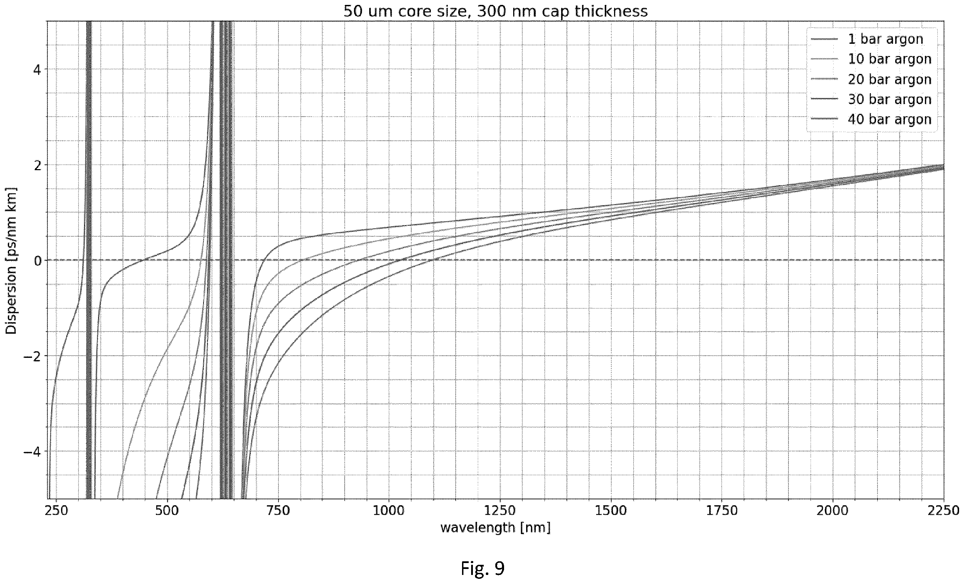

In most embodiments, the gas is pressurized to a pressure of 10 bar or more. For example, the gas may be pressurized to a pressure, which is preferably around a pressure of 20 bar or more, more preferably a pressure of 30 bar or more, even more preferably a pressure of 40 bar or more, most preferably a pressure of 50 bar or more. In the results of numerous simulations as shown in **Figs. 2-3**, and **Figs. 5-7**, the pressure was more than 10 bar, already showing the effect of increasing the pressure - namely a shift from anomalous dispersion towards normal dispersion. To show this more clearly, a simulation has been provided for a hollow core optical fiber having a core diameter of 50 microns, a 300 nm capillary wall-thickness, where the core is filled with Argon at a pressure varying from 1 to 40 bar, where the result of this can be seen in **Fig. 9****.** By using a pressure of 10 bar or more, a relatively low capillary wall-thickness of around 200 nm to 400 nm may not be needed to flatten and/or lowering the spectrum. As this may be done with relatively high pressure, a high pressure of 10 bar or more allows for relaxing the fiber design, in particular such that a capillary wall-thickness may be made thicker, and thereby more robust.

As previously described, the common method to obtain pulse broadening by SPM, has been by using low pressure, lower than 10 bar, as low non-linearity has been desired in previous devices. With the embodiments related to using higher pressures, of 10 bar or more, the inventors of the present disclosure have here proposed to obtain pulse broadening that is dominated by SPM by a method that does not rely on the common method of achieving it. One way to achieve higher pressures in a hollow core is by decreasing the core diameter from the commonly used diameters, and thereby shortening the length of the fiber, as described in the preset disclosure. Having a hollow core with a gas under pressure, such as in a gas chamber, has several advantages. Firstly, it provides a great flexibility in terms of being able to control the gas pressure, and thereby the dispersion, thereby making the spectrum, and thereby the SPM broadened pulses, tunable. Secondly, it provides a great flexibility in terms of being able to control the non-linearity.

Accordingly, in a preferred embodiment, the device comprises a gas chamber configured to hold the hollow core optical fiber and a gas at a defined pressure, whereby the hollow core is filled with the gas at the defined pressure. A short fiber is for this reason preferred in relation to this embodiment. In a more preferred embodiment, the defined pressure is adjustable, whereby a tunable multi-wavelength device is obtained.

In a most preferred embodiment, the dispersion is further selected such that that the light-pulses are spectrally broadened without significantly changing the temporal envelope of the light pulses. The reason for this is clearly that if the temporal envelope of the light pulses is allowed to significantly change, then the pulse broadening would no longer be dominated by SPM, and the generated spectrum would therefore no longer provide the characteristic SPM side lobes at the edges of the spectrum within the multi-wavelength range.

In another preferred embodiment, the dispersion is further selected such that the dispersion is selected to significantly prevent soliton-self compression. The reason for this is clearly that if soliton self-compression is allowed to significantly take place (either inside the first hollow core optical fiber or thereafter), then the pulse broadening would no longer be dominated by SPM, and the generated spectrum would therefore no longer provide the characteristic SPM side lobes at the edges of the spectrum within the multi-wavelength range.

### The pulsed light source

According to the first aspect, the pulsed light source is configured to emit a train of light-pulses, wherein each of the light-pulses are defined by a center wavelength having a first pulse duration and a first bandwidth.

In one embodiment, the center wavelength is less than 1100 nm, such as around 1030 nm. This wavelength may for example be provided by a laser having Yb as the gain medium.

In another embodiment, the center wavelength is less than 1600 nm, such as around 1550 nm.

Preferably, the wavelength may be selected to induce the SPM in the hollow core optical fiber.

In yet another embodiment, the center wavelength is less than 550 nm, such as around 515 nm. In some embodiments, for example where the wavelength is around 515 nm, the center wavelength is, prior to being pulse broadened primarily by SPM, modified to provide a modified center wavelength that is longer than the center wavelength. One way to provide the modified center wavelength may for example be by using a pulse broadening and compression stage together with a filter to filter out the modified center wavelength.

In an alternative embodiment, the center wavelength is more than 2100 nm, such as around 2460 nm. In some embodiments, for example where the wavelength is around 2460 nm, the center wavelength is, prior to being pulse broadened primarily by SPM, modified to provide a center wavelength that is shorter than the center wavelength. One way to provide the modified center wavelength may for example be by using a harmonic conversion unit. The harmonic conversion may for example be configured to provide second harmonic generation or third harmonic generation.

In a preferred embodiment, the pulse duration is less than 1 ps, such as less than 500 fs. In a more preferred embodiment, the pulse duration is between 250 fs and 500 fs. Most preferably, the pulse duration is around 400 fs.

In one embodiment, the pulsed light source further comprises a pulse compression stage, wherein the pulse compression stage comprises: a second hollow core optical fiber configured to increase the first bandwidth to a second bandwidth while forming a linear chirp across each of the light-pulses; and a de-chirping unit configured to compensate for the linear chirp, whereby the first pulse duration is reduced to a second pulse duration. The technical effect of using the pulse compression stage in combination with the first hollow core optical fiber having the dispersion that is selected such that that the light-pulses are spectrally broadened by primarily self-phase modulation (SPM), is to achieve SPM broadening in a reduced fiber length. In other words, the SPM broadening now occurs with greater efficiency, particularly in comparison to onset effects such as MI, soliton self-compression, and optical wave-breaking.

In a related embodiment, the first pulse duration is reduced to the second pulse duration, whereby the shorter input pulse duration gives two broader spectral lobes. Accordingly, in a related embodiment, the second pulse duration is responsible for broadening the first spectral lobe and the second spectral lobe. This further provides higher conversion efficiency and even shorter pulse durations at the first wavelength and the second wavelength, where the two spectral lobes are located. Since higher conversion efficiency is obtained, a low pressure, such as around 1-20 bar may be used to achieve pulse broadening that is dominated by SPM. This embodiment is thus very practical in many applications, where there is a need short pulses having multi-wavelengths, even at low gas pressures.

In most embodiments, the de-chirping unit is selected to comprise one or more of the following: a chirped mirror, a grating, a prism, and a fiber. Using a grating provides for tuning of the wavelengths. Thus, a grating may be an alternative to adjusting the pressure of a gas to achieve tunability, or it may be an add-on to tunability.

In one embodiment, the first pulse duration is a factor 2 or more than the second pulse duration, such a factor of 3 or more than the second pulse duration, such as a factor of 4 more than the second pulse duration. For example, for the latter, the first pulse duration may be around 400 fs, while the second pulse duration may be 100 fs.

### The SPM broadened spectrum and filter unit

In one embodiment, the first wavelength is less than 980 nm, such as around 920 nm or 900 nm, and wherein the second wavelength is more than 1020 nm, such as around 1100 nm. A first wavelength of around 900 nm may in some applications for example be used for photo-stimulation to avoid crosstalk with an imaging excitation path. A first wavelength of around 920 nm may in some applications be used for wide-field two-photon imaging of Ca or for voltage indicators. Since the two spectral lobes are spectrally isolated from each other, a first wavelength of around 920 and a second wavelength of around 1100 nm, may be used for neural activation and inhibition.

In another embodiment, the first wavelength may be located around 410 nm to 450 nm. A first wavelength of around this range may in some applications be used for ophthalmology.

In most embodiments, the device further comprises a filter unit configured to filter out at least a first part of the first spectral lobe and configured to filter out at least a second part of the second spectral lobe. This filter unit may be dependent on the application, and thus specified according to the application.

In preferred embodiments, the first part is a first band-filtered part having a bandwidth of 10 nm to 30 nm, and wherein the second part is a second band-filtered part having a bandwidth of 10 nm to 30 nm.

### Applications

According to the second aspect, there is discloses a system for:
- multi-photon excitation, or
- activating neurons in a brain, or
- deep-tissue multiphoton imaging, or
- high-frequency voltage imaging in neurons,
- ophthalmology, or
- laser writing, or
- spectroscopy, or
- microscopy, or
- micromachining,
wherein the system comprises the device according to the first aspect as described in detail above. Some of the applications have already been described above, as examples, where specific wavelengths for the two spectral lobes have specific purposes. The system(s) as described above may be configured to transmit the two spectral lobes onto/into an object/sample.

In most embodiments of the second aspect, the system comprises a filter unit configured to filter out at least a first part of the first spectral lobe and configured to filter out at least a second part of the second spectral lobe.

In one embodiment of the second aspect, the light having the band-filtered parts is independently modulated after filtering.

In another embodiment of the second aspect, the light having the band-filtered parts is separated into two hollow core optical fibers. In this manner, two hollow core optical fibers can be used as delivery fibers to a sample/object to be illuminated by the filtered light.

In yet another embodiment, the light having the band-filtered parts is coupled into a single hollow core optical fiber. In this manner, the single hollow core optical fiber can be used as a delivery fiber to a sample/object to be illuminated by the filtered light.

In a preferred embodiment of the second aspect, the system comprises a modulator configured to turn on and off the light source. The modulator may for example be in the form of an acoustic optical modulator (AOM).

Two examples of systems are now described in further details below.

### Example 1 - A first embodiment of the system according to the second aspect

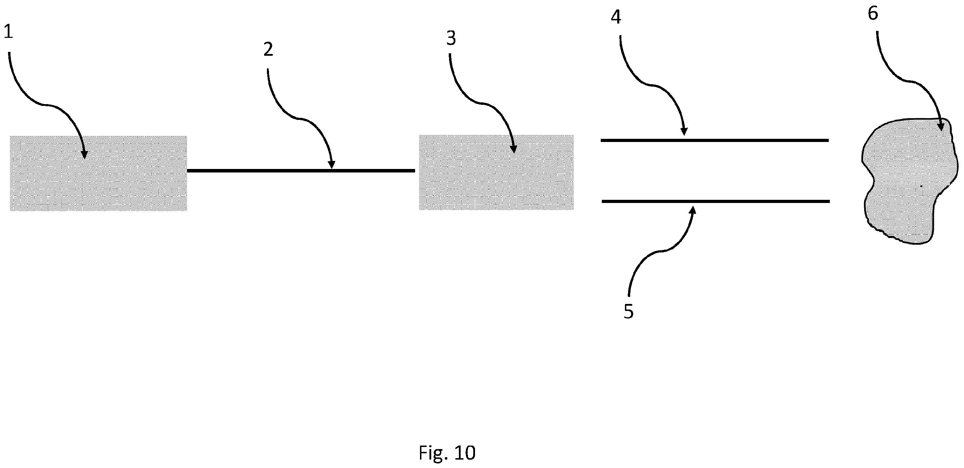

**Fig. 10** shows and embodiment of the system according to the second aspect. The system comprises the device according to the first aspect. The device comprises a pulsed light source **1** configured to emit a train of light-pulses, wherein each of the light-pulses are defined by a center wavelength having a first pulse duration and a first bandwidth. The system further comprises a first hollow core optical fiber **2** having a core diameter, D, wherein the first hollow core optical fiber is configured to spectrally broadening the train of light-pulses, thereby generating a train of multi-wavelength-pulses having a plurality of wavelengths, wherein the first hollow core optical fiber **2** has a dispersion that is selected such that that the light-pulses are spectrally broadened by primarily self-phase modulation (SPM), whereby two spectral lobes are produced within the multi-wavelength-pulses, wherein a first spectral lobe is centered around a first wavelength, wherein a second spectral lobe is centered around a second wavelength, wherein the first hollow core optical fiber **2** is an anti-resonant hollow core optical fiber, and wherein the core diameter, d, is 80 microns or less. The system comprises a filter unit **3** configured to filter out at least a first part of the first spectral lobe and configured to filter out at least a second part of the second spectral lobe. The light having the band-filtered parts is separated into two hollow core optical fibers, **4** and **5.** In this manner, two hollow core optical fibers, **4** and **5**, can be used as delivery fibers to a sample/object **6** to be illuminated by the filtered light.

In this example, the system comprises more specifically a laser source **1** giving 400 fs pulses at 1MHz and 50MW peak power. The light is launched into an anti-resonant hollow-core fiber (AR-HCF) **2** having a core diameter of 50um and capillary wall thickness of 760 nm, thereby inducing a second anti resonant band between 850-1500nm and an absolute value on the dispersion less than 10 ps/nm/km, which is anomalous at 1 bar pressure. The AR-HC fiber **2** is gas-filled with Argon to a pressure of 30-40 bar, shifting the dispersion of the 900-1100nm band to smaller absolute values either partly or fully in the anomalous or normal dispersion regime. The length of fiber **2** is 15 cm.

The light propagates through the AR-HC fiber **2** in a highly nonlinear and low dispersion environment. For normal dispersion, this limits the onset of optical wave-breaking, while for anomalous dispersion, soliton self-compression is limited, and the MI gain bands are shifted to greater detuning which can also limit MI onset. An optimal design of the optical fiber may position the MI bands into the non-transmitting resonant bands of the fiber **2**, further weakening its effect. All the above-described nonlinearities are limited, allowing self-phase modulation (SPM) to dominate as the main nonlinear effect.

The pulse broadens through SPM from <5 nm bandwidth to 920-1100 nm and has a characteristic SPM structure, where the edge lobes contain a high portion of the pulse energy. The light is emitted from the fiber **2** and goes to the filter unit. In this example, the filter unit comprises two bandpass filters, each having 10-20nm centered on the edge lobes of the SPM broadened spectrum. The filtering element spatially separates the 920nm light from the 1100 nm light, which can both be measured to have a duration of -200 fs and containing 10-20% of the laser sources power.

The two filtered light bands can be focused into AR-HCFs (**4** and **5**) of arbitrary length for beam delivery directly to the sample **6**. Alternatively, the beams can be delivered in free space using mirrors to steer to the sample. If the delivery fiber is used, the fiber has a pressure <1 bar to prevent nonlinear effects and dispersive broadening of the pulse. Specifically, Kerr or chi3 and Raman effect is mitigated, and the absolute value of dispersion becomes < 1 ps/(nm km).

### Example 2 - A second embodiment of the device according to the first aspect

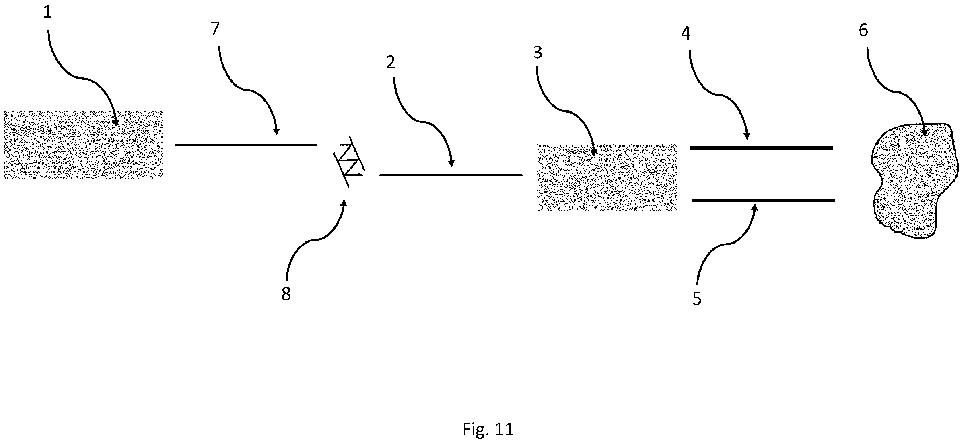

**Fig. 11** shows an embodiment of the system according to the second aspect. The system comprises the device according to the first aspect. The device comprises a pulsed light source **1** configured to emit a train of light-pulses, wherein each of the light-pulses are defined by a center wavelength having a first pulse duration and a first bandwidth. The system further comprises a first hollow core optical fiber **2** having a core diameter, D, wherein the first hollow core optical fiber is configured to spectrally broadening the train of light-pulses, thereby generating a train of multi-wavelength-pulses having a plurality of wavelengths, wherein the first hollow core optical fiber **2** has a dispersion that is selected such that that the light-pulses are spectrally broadened by primarily self-phase modulation (SPM), whereby two spectral lobes are produced within the multi-wavelength-pulses, wherein a first spectral lobe is centered around a first wavelength, wherein a second spectral lobe is centered around a second wavelength, wherein the first hollow core optical fiber **2** is an anti-resonant hollow core optical fiber, and wherein the core diameter, d, is 80 microns or less. The system comprises a filter unit **3** configured to filter out at least a first part of the first spectral lobe and configured to filter out at least a second part of the second spectral lobe. The light having the band-filtered parts is separated into two hollow core optical fibers, **4** and **5.** In this manner, two hollow core optical fibers, **4** and **5**, can be used as delivery fibers to a sample/object **6** to be illuminated by the filtered light. This is similar to the setup as shown in Fig. 10, but **Fig. 11** now has a light source **2**, which comprises a pulse compression stage, wherein the pulse compression stage that comprises a second hollow core optical fiber **7** configured to increase the first bandwidth to a second bandwidth while forming a linear chirp across each of the light-pulses; and a de-chirping unit **8** configured to compensate for the linear chirp, whereby the first pulse duration is reduced to a second pulse duration, wherein the de-chirping unit **8** is selected to comprise two chirped mirrors.

In this example, the system comprises more specifically an AR-HCF **7** in the pulse compression stage that has a core diameter of 50um and is operated at 1 bar pressure with a length of 10 cm but can have greater or lower pressure primarily to control non-linearity. The pulse in the AR-HCF **7** of the compression stage is used to increase the bandwidth from ~3.9 nm to 16 nm. The chirped mirrors **8** then compensate the linear chirp accumulated across the central region of the pulse (with respect to the frequency domain), reducing the pulse duration from 400 fs to 100 fs.

The pulse launched into the AR-HCF **2** for SPM broadening (coming from the pulse compression stage) has a pulse duration of 100 fs and thereby a peak power of 200 MW. The SPM broadening now occurs with greater efficiency in comparison to onset effects such as MI, soliton self-compression, and optical wave-breaking. This is mostly due to the SPM effect achieving full broadening over short a reduced fiber length.

The shorter input pulse duration also gives broader lobes at 920nm and 1100nm which provides higher conversion efficiency and shorter pulse durations at 920 and 1100nm.

## Claims

1. A device for multi-wavelength generation, comprising:
- a pulsed light source configured to emit a train of light-pulses, wherein each of the light-pulses are defined by a center wavelength having a first pulse duration and a first bandwidth, and
- a first hollow core optical fiber having a core diameter, D, wherein the first hollow core optical fiber is configured to spectrally broadening the train of light-pulses, thereby generating a train of multi-wavelength-pulses having a plurality of wavelengths,
wherein the first hollow core optical fiber has a dispersion that is selected such that that the light-pulses are spectrally broadened by primarily self-phase modulation (SPM),
whereby two spectral lobes are produced within the multi-wavelength-pulses,
wherein a first spectral lobe is centered around a first wavelength, wherein a second spectral lobe is centered around a second wavelength,
wherein the first hollow core optical fiber is an anti-resonant hollow core optical fiber, and
wherein the core diameter, d, is 80 microns or less.

2. The device according to claim 1, wherein the core diameter, D, is preferably ranging from 20 microns to 70 microns, more preferably from 30 microns to 60 microns, more preferably ranging from 40 microns to 50 microns, or from 50 microns to 80 microns.

3. The device according to any of the previous claims, wherein the dispersion is selected to be below an absolute value of 20 ps/(nm km) for the wavelengths ranging from 900 nm 1200 nm, such as ranging from 900 nm to 1100 nm, more preferably wherein the dispersion is selected to be below an absolute value of 10 ps/(nm km) for the wavelengths ranging from 900 nm to 1200 nm, such as ranging from 900 nm to 1100 nm.

4. The device according to any of the previous claims, wherein the first hollow core optical fiber comprises a plurality of capillaries, forming anti-resonant structures, each of the capillaries having a capillary wall-thickness, t, that is below 800 nm, such as below 500 nm, such as below 400 nm, such as around 300 nm.

5. The device according to any of the previous claims, wherein the first hollow core optical fiber has a length of less than 3.0 m, more preferably less than 2.0 m, even more preferably less than 1.0 m, most preferably less than 0.5 m, such as less than 0.3 m or less than 0.1 m.

6. The device according to claim 1, wherein the first hollow core optical fiber is filled with air, or wherein the first hollow core optical fiber is filled with a gas different from air, and wherein the gas is a Raman inactive gas, preferably one of the gases being Argon, Helium, Neon, Krypton and Xenon.

7. The device according to claim 6, wherein the gas is pressurized to a pressure of 10 bar or more, preferably around a pressure of 20 bar or more, more preferably a pressure of 30 bar or more, even more preferably a pressure of 40 bar or more, most preferably a pressure of 50 bar or more.

8. The device according to any of the preceding claims, wherein the pulsed light source further comprises a pulse compression stage, wherein the pulse compression stage comprises:
- a second hollow core optical fiber configured to increase the first bandwidth to a second bandwidth while forming a linear chirp across each of the light-pulses; and
- a de-chirping unit configured to compensate for the linear chirp, whereby the first pulse duration is reduced to a second pulse duration, wherein the de-chirping unit is selected to comprise one or more of the following:
∘ a chirped mirror,
∘ a grating,
∘ a prism, and
∘ a fiber.

9. The device according to claim 8, wherein the first pulse duration is a factor 2 or more than the second pulse duration, such a factor of 3 or more than the second pulse duration, such as a factor of 4 more than the second pulse duration.

10. The device according to any of the claims 8 or 9, wherein the second pulse duration is responsible for broadening the first spectral lobe and the second spectral lobe.

11. The device according to any of the preceding claims, wherein the first wavelength is less than 980 nm, such as around 920 nm, and wherein the second wavelength is more than 1020 nm, such as around 1100 nm.

12. The device according to any of the preceding claims, wherein the device further comprises a filter unit configured to filter out at least a first part of the first spectral lobe and configured to filter out at least a second part of the second spectral lobe.

13. The device according to claim 12, wherein the first part is a first band-filtered part having a bandwidth of 10 nm to 30 nm, and wherein the second part is a second band-filtered part having a bandwidth of 10 nm to 30 nm.

14. The device according to any of the preceding claims, wherein the dispersion is further selected such that that the light-pulses are spectrally broadened without significantly changing the temporal envelope of the light pulses, and/or wherein the dispersion is selected to significantly prevent soliton-self compression.

15. A system configured for:
- multi-photon excitation, or
- activating neurons in a brain, or
- deep-tissue multiphoton imaging, or
- high-frequency voltage imaging in neurons, or
- laser writing, or
- spectroscopy, or
- microscopy, or
- micromachining,
wherein the system comprises the device according to any of the claim 1-14.
